# EUROPÄISCHE PATENTSCHRIFT

(11) **EP 0 759 521 B1**
(45) Veröffentlichungstag und Bekanntmachung des Hinweises auf die Patenterteilung: **26.01.2000**
(21) Anmeldenummer: 96109953.8
(22) Anmeldetag: 20.06.1996
(51) Int. Cl.: F16K 15/03, F16K 27/02

(54) **Rückschlagventil**
Check valve
Clapet non-retour

(30) Priorität: 19.08.1995 DE 29513329 U
(43) Veröffentlichungstag der Anmeldung: 26.02.1997
(73) Patentinhaber: FESTO AG & Co, 73734 Esslingen (DE)
(72) Erfinder: Stoll, Kurt, Dr., 73732 Esslingen (DE); Hanold, Wolfgang, 73334 Gruibingen (DE)
(74) Vertreter: Abel, Martin, Dipl.-Ing.

(56) Entgegenhaltungen:
- DE-A- 2 301 255
- DE-A- 4 404 350
- FR-A- 1 592 547
- FR-A- 2 369 482
- US-A- 3 628 565

## Beschreibung

Die Erfindung betrifft ein Rückschlagventil, mit einer beweglichen Verschlußplatte, die in der Durchgangsöffnung eines Halteringes angeordnet ist, mit dem sie unter Bildung einer Baueinheit an einer Stelle ihres Umfangsrandes über einen flexiblen Biegebereich in einstückiger schwenkbeweglicher Verbindung steht, mit einem Befestigungsteil, das eine einen Fluiddurchgang ermöglichende Durchbrechung aufweist und mit dessen Hilfe sich der Haltering derart an einem Gehäuse fixieren läßt, daß er zwischen dem Befestigungsteil und einem zugewandten gehäusefesten Wandabschnitt eingespannt ist, wobei gleichzeitig die Verschlußplatte in einem Strömungskanal des Gehäuses angeordnet ist und einem im Umfangsbereich der Durchbrechung des Befestigungsteils vorgesehenen Ventilsitz gegenüberliegt.

Ein Rückschlagventil dieser Art geht aus der DE-A-2 369 482 hervor. Bei diesem bekannten Rückschlagventil ist die sich aus dem Haltering und der Verschlußplatte zusammensetzende Baueinheit an einem ringförmigen Befestigungsteil angeordnet und gemeinsam mit diesem derart zwischen zwei Gehäuseteile eingespannt, daß die Durchbrechung des Befestigungsteils und die dieser Durchbrechung gegenüberliegende Verschlußplatte im Verlauf eines in einem Gehäuse vorgesehenen Strömungskanals zu liegen kommen. Dabei ist das Befestigungsteil zusammen mit dem Haltering zwischen zwei Gehäuseteilen eingespannt, die durch Befestigungsschrauben miteinander verbunden sind. Für die Montage und Demontage des Rückschlagventils ist es erforderlich, die Schraubverbindungen zu lösen und das Gehäuse in seiner Bestandteile zu zerlegen.

Rückschlagventile vergleichbaren Aufbaues zeigen auch die DE-A-2 301 255 und die FR-A-1 592 547.

In der US-A-3,628,565 wird ein Rückschlagventil beschrieben, das in einen umfangsseitigen Schlitz eines rohrförmigen Gehäuses eingesteckt wird, wobei zur Fixierung der Position ein Schlauch auf das Gehäuse aufgesteckt und durch einen Klemmring gesichert wird.

Es ist die Aufgabe der vorliegenden Erfindung, ein Rückschlagventil der eingangs genannten Art zu schaffen, das eine einfache Montage auch dann ermöglicht, wenn das zugeordnete Gehäuse an der betreffenden Stelle nicht geteilt ist.

Zur Lösung dieser Aufgabe ist vorgesehen, daß an dem Befestigungsteil Rastmittel vorhanden sind, die eine verrastende Verankerung des Befestigungsteils in einer von dem Strömungskanal gebildeten und sich an den gehäuseseitigen Wandabschnitt anschließenden Gehäuseausnehmung ermöglichen, wobei der gehäusefeste Wandabschnitt von einem abgestuften Übergang des Strömungskanals gebildet ist.

Ein derartiges Rückschlagventil zeichnet sich neben einem sehr raschen Ansprechverhalten durch eine relativ einfache Montage aus, und zwar insbesondere auch in Fällen, bei denen das zugeordnete Gehäuse in der vorgesehenen Betriebsstellung des Rückschlagventils nicht geteilt ist. Die Rastmittel gestatten dabei eine problemlose Arretierung des Rückschlagventils innerhalb des zu steuernden Kanals.

Vorteilhafte Weiterbildungen des erfindungsgemäßen Rückschlagventils gehen aus den Unteransprüchen hervor.

Die aus der Verschlußplatte und dem Haltering bestehende Baueinheit ist zweckmäßigerweise vollständig in Material mit gummielastischen Eigenschaften ausgeführt. Sie kann daher sehr kostengünstig als einstückiges Bauteil durch ein Gießverfahren hergestellt werden.

Ist die Verschlußplatte höheren Kräften ausgesetzt, beispielsweise bei einem Einsatz im Zusammenhang mit Überdruckanwendungen, so kann es zweckmäßig sein, in die Verschlußplatte ein aus härterem Material bestehendes Versteifungselement einzubetten. Dieses kann bei der Gießherstellung als Einlegeteil problemlos integriert werden.

Das Rückschlagventil eignet sich vorteilhaft für einen Einsatz im Zusammenhang mit einer Unterdruck erzeugenden Absaugvorrichtung, da es bei Wegfall der Absaugquelle augenblicklich in die Schließstellung umschalten kann, so daß das erzeugte Vakuum hält.

Nachfolgend wird die Erfindung anhand der beillegenden Zeichnung näher erläutert. In dieser zeigen:
- Figur 1: eine zur Erzeugung des Unterdruckes dienende Absaugvorrichtung im Längsschnitt, die mit dem erfindungsgemäßen Rückschlagventil ausgestattet ist, das hier nur strichpunktiert angedeutet ist,
- Fig. 2: eine vergrößerte Darstellung des in Fig. 1 umrahmten Ausschnittes II, wobei das Rückschlagventil im Querschnitt gezeigt ist,
- Fig. 3: eine Draufsicht auf die aus einem Haltering und einer Verschlußplatte bestehende Baueinheit mit Blickrichtung gemäß Pfeil III aus Fig. 2 und
- Fig. 4: eine weitere Ausgestaltung der erwähnten Baueinheit mit abweichender Formgebung.

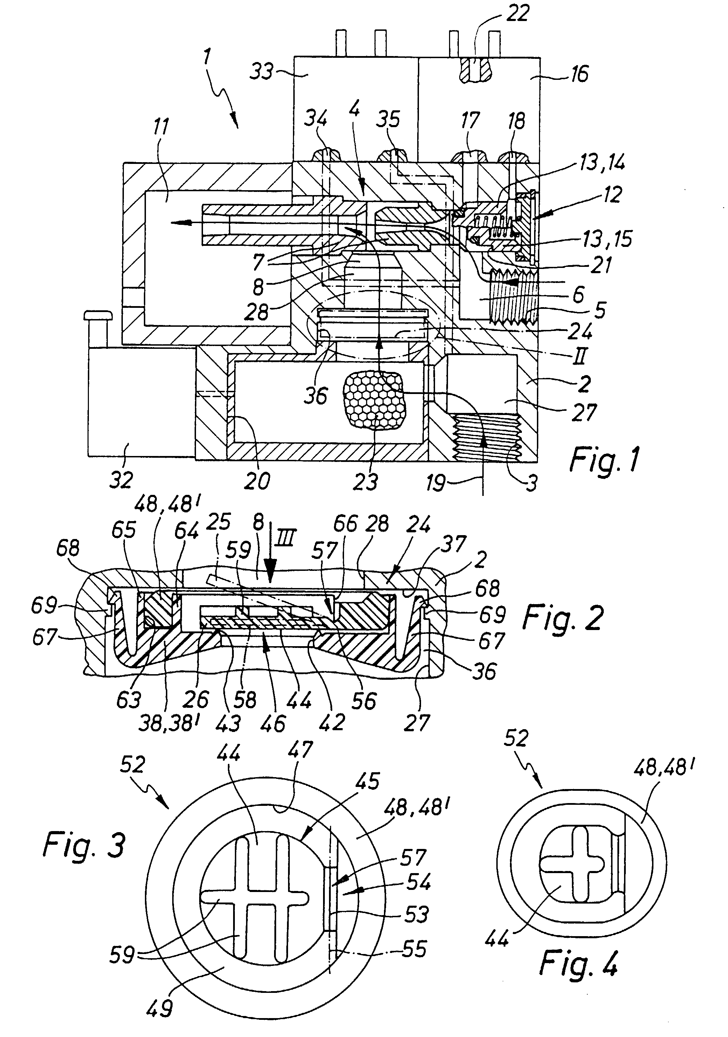

Die in Fig. 1 gezeigte Absaugvorrichtung 1 verfügt über ein Gehäuse 2, das mit einer Absaugöffnung 3 versehen ist. An letzterer wird ein nicht näher dargestellter Saugnapf festgelegt, der sich auf einem handzuhabenden Gegenstand absetzen läßt.

In der Absaugvorrichtung 1 ist eine als Unterdruckeinrichtung 4 bezeichnete Einrichtung vorgesehen, die an der Absaugöffnung 3 eine gewünschte Absaugwirkung verursacht. Sie umfaßt beim Ausführungsbeispiel eine Anschlußöffnung 5, die über eine nicht näher dargestellte Druckmittelleitung mit einer Druckmittelquelle, insbesondere einer Druckluftquelle, verbindbar ist. An die Anschlußöffnung 5 schließt sich ein Blaskanal 6 an, der von dem über die Anschlußöffnung 5 zugeführten Druckmittel durchströmt wird. Im Verlauf des Blaskanals 6 befindet sich eine als solches bekannte Ejektoreinrichtung 7, die in einem seitlich in dem Blaskanal 6 mündenden Absaugkanal 8 einen Unterdruck erzeugt, der zu der Absaugöffnung 3 führt. Die aus der Ejektoreinrichtung 7 ausströmende Druckluft gelangt in eine Gehäusekammer 11, aus der sie zur Umgebung abströmt.

Die Erzeugung des Unterdruckes in dem Absaugkanal 8 beruht auf dem sogenannten Ejektorprinzip, das dem Fachmann bekannt ist und daher an dieser Stelle nicht näher erläutert werden muß.

Denkbar wäre es natürlich auch, als Unterdruckeinrichtung 4 eine einfache Absaugpumpe vorzusehen, die den Absaugkanal 8 beaufschlagt.

Um den im Absaugkanal 8 herrschenden Unterdurck beeinflussen zu können, wird der Blaskanal 6 von einem Absperrventil 12 beherrscht. Dieses hat ein vorzugsweise kolbenartiges Absperrglied 13, das zwischen einer den Fluiddurchgang durch den Blaskanal 6 absperrenden Schließstellung 14 und einer den Fluiddurchgang freigebenden Offenstellung 15 umschaltbar ist. Die Schaltstellung wird über ein erstes Magnetventil 16 vorgegeben, dessen Eingang 17 mit der Anschlußöffnung 5 kommuniziert und dessen Ausgang 18 mit der Rückseite des Absperrgliedes 13 in Verbindung steht. Bei geöffnetem Magnetventil 16 wird somit das Absperrglied 13 durch den rückseitig anstehenden Steuerdruck in der Schließstellung 14 gehalten. Zum Umschalten in die Offenstellung 15 wird das erste Magnetventil 16 umgesteuert, so daß der Eingang 17 abgesperrt und der Ausgang 18 über eine Entlüftungsöffnung 22 entlüftet wird. Der an der Anschlußöffnung 5 anstehende Druck beaufschlagt auch eine in Schließrichtung weisende Beaufschlagungsfläche 21 des Absperrgliedes 13, so daß dieses bei entlüfteter Rückseite ohne weiteres in die Offenstellung umschaltet.

Die bei offenem Absperrventil 12 über den Absaugkanal 8 einströmende Luft durchsetzt gemäß Pfeil 19 einen in eine Gehäusekammer 20 eingesetzten Luftfilter 23. Auf diese Weise wird verhindert, daß das zwischen den Luftfilter 23 und die Ejektoreinrichtung 7 in den Absaugkanal 8 eingeschaltete Rückschlagventil 24 verschmutzt. Dieses in Fig. 2 vergrößert dargestellte Rückschlagventil 24 ist so ausgebildet und angeordnet, daß es während des Betriebes der Unterdruckeinrichtung 4 eine in Fig. 2 strichpunktiert angedeutete Offenstellung 25 einnimmt, in der es eine Luftströmung von der Absaugöffnung 3 in den Blaskanal 6 zuläßt. Bei abgeschalteter Unterdruckeinrichtung 4 hingegen befindet sich das Rückschlagventil 24 in der in Fig. 2 in durchgezogenen Linien gezeigten Schließstellung 26, in der eine Luftströmung in Richtung zur Absaugöffnung 3 unterbunden wird.

Der Absaugkanal 8 wird durch das Rückschlagventil 24 in einen der Absaugöffnung 3 zugeordneten ersten Kanalabschnitt 27 und einen der Unterdruckeinrichtung 4 bzw. der Ejektoreinrichtung 7 zugeordneten zweiten Kanalabschnitt 28 unterteilt. Bei geschlossenem Rückschlagventil 24 ist gewährleistet, daß der in dem ersten Kanalabschnitt 27 erzeugte Unterdruck bestehen bleibt. Nur dadurch ist gewährleistet, daß ein handzuhabender Gegenstand an dem schon erwähnten Saugnapf haften bleibt, der über die Unterdruckeinrichtung 4 evakuiert wurde.

Ein mit dem ersten Kanalabschnitt 27 und zweckmäßigerweise mit der in dessen Verlauf eingeschalteten Gehäusekammer 20 kommunizierender Drucksensor 32 steuert das erste Magnetventil 16. Auf diese Weise kann die Unterdruckeinrichtung 4 zum Zwecke der Lufteinsparung automatisch abgeschaltet werden, wenn im ersten Kanalabschnitt 27 der gewünschte Unterdruck bezüglich der Atmosphäre vorliegt. Damit beim Abschalten der Unterdruckeinrichtung 4 kein nennenswerter Druckabfall in dem ersten Kanalabschnitt 27 auftritt, muß das Rückschlagventil 24 sehr reaktionsschnell sein und sehr rasch, also praktisch ohne Hysterese, in die Schließstellung umschalten. Dies ist durch den nachstehend erläuterten Aufbau des Rückschlagventils 24 gewährleistet.

Um bei Bedarf einen an dem Saugnapf anhaftenden Gegenstand absetzen zu können, ist beim Ausführungsbeispiel ein zweites Magnetventil 33 vorgesehen, dessen Eingang 34 mit der Anschlußöffnung 5 und dessen Ausgang 35 mit der Absaugöffnung 3 kommuniziert. Dadurch ist es möglich, die Absaugöffnung 3 bei Bedarf mit Überdruck zu beaufschlagen, so daß der zuvor herrschende Unterdruck schlagartig abgebaut wird und der anhaftende Gegenstand abfällt.

Es folgt nun anhand der Fig. 2 und 3 eine nähere Beschreibung eines Rückschlagventils 24 bevorzugten Aufbaus.

Das Rückschlagventil 24 befindet sich in einer Gehäuseausnehmung 36 des Gehäuses 2, die von dem sich an den zweiten Kanalabschnitt 28 anschließenden Endabschnitt des ersten Kanalabschnittes 27 gebildet ist. Dieser Endabschnitt ist im Vergleich zum anschließenden zweiten Kanalabschnitt 28 mit größerem Querschnitt ausgeführt, so daß ein abgestufter Übergang vorliegt, der in einem dem ersten Kanalabschnitt 27 zugewandten ersten gehäusefesten Wandabschnitt 37 resultiert. Dieser bildet einen Anschlag für das Rückschlagventil 24, das dort mit Hilfe eines Befestigungsteils 38 an Ort und Stelle gehalten wird. Dieses Befestigungsteil 38 ist lösbar am Gehäuse 2 festgelegt und bildet somit ebenfalls einen gehäusefesten Wandabschnitt.

Das beispielsgemäß etwa scheiben- oder plattenförmig ausgebildete Befestigungsteil 38 verfügt über eine zentrale Durchbrechung 42, die einen Fluiddurchgang und somit eine Kommunikation zwischen den beiden Kanalabschnitten 27, 28 ermöglicht.

Vorzugsweise ist an dem Befestigungsteil 38 der Ventilsitz 43 des Rückschlagventils 24 vorgesehen. Er umgibt die Durchbrechung 42 ringförmig und ist vorliegend als in Richtung zum zweiten Kanalabschnitt 28 ragende kragenförmige Erhebung ausgeführt. Er ist bevorzugt einstückiger Bestandteil des Befestigungsteils 38, das zweckmäßigerweise eine Kunststoffteil ist, so daß er sehr einfach hergestellt werden kann. Am Gehäuse 2 selbst erübrigt sich danach die Anformung eines Ventilsitzes.

Das Rückschlagventil 24 steuert den Fluiddurchgang durch den Strömungskanal 8, indem es in Schließstellung die Durchbrechung 42 dicht verschließt und in Offenstellung mehr oder weniger weit freigibt. Das hierbei mit dem Ventilsitz 43 zusammenarbeitende Verschlußglied ist im wesentlichen plattenähnlich ausgestaltet und sei daher als Verschlußplatte 44 bezeichnet. Ihr Umfangsrand 45 hat einen vorliegend im wesentlichen kreisförmigen Verlauf. In der Schließstellung liegt sie mit der glattflächigen Unterseite 46 dichtend auf dem Ventilsitz 43 auf.

Die Verschlußplatte 44 ist in der Durchgangsöffnung 47 eines beim Ausführungsbeispiel in sich geschlossenen Halteringes 48 angeordnet. Bevorzugt liegt eine konzentrische Zuordnung zwischen der Verschlußplatte 44 und dem Haltering 48 vor. Die Grundfläche der Verschlußplatte 44 ist geringer als die Querschnittsfläche der Durchgangsöffnung 47, so daß radial zwischen der Verschlußplatte 44 und dem Haltering 48 ein bogenförmig gekrümmter Spalt 49 vorliegt.

Die Erstreckung des Spaltes 49 beträgt weniger als 360°. Er ist an einer Stelle seines Umfanges von einem flexiblen Biegebereich 53 unterbrochen, der den Spalt 49 stegartig überspannt und eine schwenkbewegliche Verbindung zwischen dem Haltering 48 und der Verschlußplatte 44 darstellt. Die Verschlußplatte 44 ist also an einer Stelle 54 ihres Umfangsrandes 45 über diesen biegeflexiblen Biegebereich 53 vorzugsweise einstückig mit dem Haltering 48 verbunden. Sie bildet somit gemeinsam mit dem Haltering 48 eine gemeinsame handhabbare, zusammenhängende Baueinheit 52. Der Biegebereich kann sich aus mehreren beabstandeten stegartigen Partien zusammensetzen.

Ohne Einfluß irgend welcher äußeren Kräfte nehmen die Verschlußplatte 44 und der Haltering 48 relativ zueinander eine Grundstellung ein, die aus Fig. 2 und 3 ersichtlich ist. In dieser Grundstellung verläuft die die Verschlußplatte 44 enthaltende Ebene parallel zur Ringebene des Halteringes 48, wobei ein gewisser Parallelversatz vorhanden sein kann.

Ist die Baueinheit 52 in das Gehäuse 2 eingebaut und nimmt dort die Betriebsstellung ein, so entspricht die eben erwähnte Grundstellung der Schließstellung 26. Die Offenstellung 25 unterscheidet sich hiervon durch eine winkelige Ausrichtung der Ebene der Verschlußplatte 44 mit Bezug zur Ringebene. Dabei ist die Verschlußplatte 44 um den Biegebereich 53 verschwenkt, wobei der Biegebereich 53 zweckmäßigerweise eine Schwenkachse 55 definiert, die parallel zur Ringebene und gleichzeitig mit Bezug zu dem Haltering 48 nach Art einer Sekante verläuft.

In der in das Gehäuse 2 eingebauten Betriebsstellung ist die Baueinheit 52 über den Haltering 48 gehäusefest fixiert. Beispielsgemäß erfolgt dies dadurch, daß der Haltering 48 zwischen dem ersten gehäusefesten Wandabschnitt 37 und einem von dem Befestigungsteil 38 gebildeten gehäusefesten Wandabschnitt 38' axial fest eingespannt ist. Das in der Gehäuseausnehmung 36 verankerte Befestigungsteil 38 drückt den Haltering 48 fest gegen den ersten gehäusefesten Wandabschnitt 37.

Vorteilhafterweise ist der Haltering 48 als Dichtungsring 48' ausgebildet. Er besteht beispielsgemäß aus Material mit gummielastischen Eigenschaften, beispielsweise Gummi oder ein Elastomermaterial. Dies hat den Vorteil, daß der Befestigungsbereich der Verschlußplatte 44 fluiddicht abgedichtet ist und in der Schließstellung kein Fluidübertritt zwischen den beiden Kanalabschnitten 27, 28 zwischen den beiden gehäusefesten Wandabschnitten 37, 38' hindurch stattfinden kann.

Bevorzugt ist die gesamte Baueinheit 52 einstückig ausgebildet und besteht zweckmäßigerweise aus Material mit gummielastischen Eigenschaften. Dies gewährleistet sowohl einen guten Dichteffekt zwischen dem Dichtungsring 48' und den gehäusefesten Wänden sowie zwischen der Verschlußplatte 44 und dem Ventilsitz 43 als auch eine leichte Schwenkbeweglichkeit der Verschlußplatte 44 im Biegebereich 53. Dieser Biegebereich 53 ist vorliegend von einem Materialsteg 56 reduzierter Dicke gebildet, wobei die Schwenkbeweglichkeit durch eine Einkerbung 57 weiter verbessert werden kann. Speziell dann, wenn das Rückschlagventil 24 bei überdruckanwendungen eingesetzt wird, also zur Steuerung von Fluidströmen mit über dem Atmosphärendruck liegendem Betriebsdruck, kann es zweckmäßig sein, ein Versteifungselement 58 in die Verschlußplatte 44 zu integrieren, das aus härterem bzw. steiferem Material als das Material der Verschlußplatte 44 selbst besteht. Das Versteifungselement 58 kann ebenfalls plattenförmig ausgebildet sein und ist zweckmäßigerweise vollständig vom Material der Verschlußplatte 44 umschlossen. Wird die Baueinheit 52 als Spritzgußteil hergestellt, kann das Versteifungselement 58 problemlos als Einlegeteil eingesetzt werden.

Beim Ausführungsbeispiel verfügt die Verschlußplatte 44 an der dem Ventilsitz 43 abgewandten Oberseite über Versteifungsrippen 59, die trotz der Elastizität der Verschlußplatte 44 eine ausreichende Formtreue gewährleisten.

Die Baueinheit 52 wird zweckmäßigerweise gemeinsam mit dem Befestigungsteil 38 im Gehäuse 2 montiert. Hierzu wird die Baueinheit 52 vorab in eine im wesentlichen nutähnliche Ausnehmung 63 der dem ersten gehäusefesten Wandabschnitt 37 zugewandten Oberseite des Befestigungsteils 38 eingelegt. Die Ausnehmung 63 hat bevorzugt die Gestalt einer den Haltering 48 aufnehmenden Ringnut mit zwei konzentrisch zueinander angeordneten Wänden 64, 65, die den Haltering 48 radial innen und außen flankieren. Allerdings verfügt die innere Wand 64 an einer Stelle ihres Umfanges über eine Durchbrechung 66, die von dem Biegebereich 53 bzw. Materialsteg 56 durchsetzt wird.

Die Verankerung des Befestigungsteils 38 in der Gehäuseausnehmung 36 erfolgt zweckmäßigerweise im Rahmen einer Rastverbindung. Beim Ausführungsbeispiel sind im Umfangsbereich des Befestigungsteils 38 Rastmittel 67 vorgesehen, die in Gestalt biegeelastischer Arme mit hakenartigen Vorsprüngen 68 ausgeführt sind. Letztere können im eingesetzten Zustand gehäusefeste Rastvorsprünge 69 hintergreifen, so daß das Befestigungsteil 38 axial unbeweglich arretiert ist.

In Verbindung mit dem Befestigungsteil 38 kann das Rückschlagventil 24 problemlos in jedem zu steuernden Kanal fixiert werden, wenn entsprechende Mittel vorhanden sind, um das Befestigungsteil 38 zu verankern. Daher erschließen sich universelle Einsatzgebiete.

Während beim Ausführungsbeispiel der Fig. 1 bis 3 die Baueinheit 52 kreisförmig konturiert ist und insbesondere der Haltering 48 eine kreisringförmige Gestalt hat, macht die Fig. 4 deutlich, daß unter Beibehaltung des erfinderischen Prinzips auch andere Formgebungen möglich sind. So zeigt die Fig. 4 beispielsweise eine Baueinheit 52 mit länglicher, stirnseitig abgerundeter Form. Die Formgebung hängt maßgeblich vom Querschnitt des zu steuernden Strömungskanales 8 ab.

## Patentansprüche

1. Rückschlagventil, mit einer beweglichen Verschlußplatte (44), die in der Durchgangsöffnung (47) eines Halteringes (48) angeordnet ist, mit dem sie unter Bildung einer Baueinheit (52) an einer Stelle ihres Umfangsrandes (45) über einen flexiblen Biegebereich (53) in einstückiger schwenkbeweglicher Verbindung steht, mit einem Befestigungsteil (38), das eine einen Fluiddurchgang ermöglichende Durchbrechung (42) aufweist und mit dessen Hilfe sich der Haltering (48) derart an einem Gehäuse (2) fixieren läßt, daß er zwischen dem Befestigungsteil (38) und einem zugewandten gehäusefesten Wandabschnitt (37) eingespannt ist, wobei gleichzeitig die Verschlußplatte (44) in einem Strömungskanal des Gehäuses (2) angeordnet ist und einem im Umfangsbereich der Durchbrechung (42) des Befestigungsteils (38) vorgesehenen Ventilsitz (43) gegenüberliegt, dadurch gekennzeichnet, daß an dem Befestigungsteil (38) Rastmittel (67) vorhanden sind, die eine verrastende Verankerung des Befestigungsteils (38) in einer von dem Strömungskanal (8) gebildeten und sich an den gehäusefesten Wandabschnitt (37) anschließenden Gehäuseausnehmung (36) ermöglichen, wobei der gehäusefeste Wandabschnitt (37) von einem abgestuften Übergang des Strömungskanals (8) gebildet ist.

2. Rückschlagventil nach Anspruch 1, dadurch gekennzeichnet, daß zwischen der Verschlußplatte (44) und dem Haltering (48), abgesehen von der Stelle des Biegebereiches (53), ein Spalt (49) vorliegt.

3. Rückschlagventil nach Anspruch 1 oder 2, dadurch gekennzeichnet, daß die Verschlußplatte (44) zwischen einer im wesentlichen parallel zur Ringebene des Halteringes (48) ausgerichteten Schließstellung und wenigstens einer winkelig dazu stehenden Offenstellung um den Biegebereich (53) verschwenkbar ist.

4. Rückschlagventil nach einem der Ansprüche 1 bis 3, dadurch gekennzeichnet, daß die aus der Verschlußplatte (44) und dem Haltering (48) bestehende Baueinheit (52) aus Material mit gummielastischen Eigenschaften besteht.

5. Rückschlagventil nach Anspruch 4, dadurch gekennzeichnet, daß in die Verschlußplatte (44) ein Versteifungselement (58) aus härterem Material als die Verschlußplatte (44) eingebettet ist.

6. Rückschlagventil nach einem der Ansprüche 1 bis 5, dadurch gekennzeichnet, daß die Verschlußplatte (44) auf der dem Ventilsitz (43) abgewandten Oberseite mit Versteifungsrippen (59) versehen ist.

7. Rückschlagventil nach einem der Ansprüche 1 bis 6, dadurch gekennzeichnet, daß der Biegebereich (53) von einem Materialsteg (56) geringer Dicke gebildet ist.

8. Rückschlagventil nach einem der Ansprüche 1 bis 7, dadurch gekennzeichnet, daß es Bestandteil einer zur Erzeugung von Unterdruck dienenden Absaugvorrichtung (1) ist.

## Claims

1. Non-return valve with a movable sealing plate (44) located in the through aperture (47) of a retaining ring (48), to which it is pivotably joined at a point of its circumferential edge (45) by a flexible bending area (53) to form a one-part assembly (52), with a mounting part (38) with an opening (42) allowing the passage of fluid, by means of which the retaining ring (48) can be so fixed to a housing (2) that it is clamped between the mounting part (38) and an adjacent wall section (37) of the housing, the sealing plate (44) being at the same time located in a flow path of the housing (2) and lying opposite a valve seat (43) provided in the circumferential area of the opening (42) of the mounting part (38), characterized in that the mounting part (38) is fitted with detent means (67) permitting the location and anchoring of the mounting part (38) in a housing recess (36) formed by the flow path (8) and the adjoining wall section (37) of the housing, the wall section (37) of the housing being formed by a stepped transition of the flow path (8).

2. Non-return valve according to claim 1, characterized in that, with the exception of the place of the bending area (53), there is a gap (49) between the sealing plate (44) and the retaining ring (48).

3. Non-return valve according to claim 1 or 2, characterized in that the sealing plate (44) pivots about the bending area (53) between a closed position in which it is aligned substantially parallel to the ring plane of the retaining ring (48) and one or more open positions lying at an angle relative thereto.

4. Non-return valve according to any of claims 1 to 3, characterized in that the assembly (52) comprising the sealing plate (44) and the retaining ring (48) consists of a material with rubber-elastic properties.

5. Non-return valve according to claim 4, characterized in that a reinforcing element (58) made of a harder material than the sealing plate (44) is embedded in the sealing plate (44).

6. Non-return valve according to any of claims 1 to 5, characterized in that the sealing plate (44) is provided with reinforcing ribs (59) on its top side remote from the valve seat (43).

7. Non-return valve according to any of claims 1 to 6, characterized in that the bending area (53) is formed by a material web (56) of reduced thickness.

8. Non-return valve according to any of claims 1 to 7, characterized in that it is a component of suction equipment (1) for the generation of a vacuum.

## Revendications

1. Clapet de non-retour comportant une plaque d'obturation (44) mobile, qui est disposée dans l'ouverture de passage (47) d'une bague de maintien (48) avec laquelle elle est en liaison mobile à pivotement, d'un seul tenant, en un point de son bord périphérique (45), par une zone de pliage flexible (53), en formant un ensemble (52), comportant un élément de fixation (38) qui présente un ajour (42) permettant le passage d'un fluide et à l'aide duquel la bague de maintien (48) peut être fixée à un boîtier (2) de manière à être serrée entre l'élément de fixation (38) et une partie de paroi (37) solidaire du boîtier et tournée vers cet élément de fixation, la plaque d'obturation (44) étant disposée en même temps dans un canal d'écoulement du boîtier (2) et faisant face à un siège (43) du clapet prévu dans la zone périphérique de l'ajour (42) de l'élément de fixation (38), caractérisé en ce que sur l'élément de fixation (38) sont prévus des moyens d'encliquetage (67) qui permettent un ancrage par encliquetage de l'élément de fixation (38) dans un évidement (36) du boîtier, formé par le canal d'écoulement (8) et se raccordant à la partie de paroi (37) solidaire du boîtier, la partie de paroi (37) solidaire du boîtier étant formée par une zone de transition étagée du canal d'écoulement (8).

2. Clapet de non-retour selon la revendication 1, caractérisé en ce qu'une fente (49) existe entre la plaque d'obturation (44) et la bague de maintien (48), à l'exception de l'emplacement de la zone de pliage (53).

3. Clapet de non-retour selon la revendication 1 ou 2, caractérisé en ce que la plaque d'obturation (44) peut pivoter autour de la zone de pliage (53), entre une position de fermeture orientée sensiblement parallèlement au plan annulaire de la bague de maintien (48) et au moins une position d'ouverture formant un angle avec la position de fermeture.

4. Clapet de non-retour selon l'une des revendications 1 à 3, caractérisé en ce que l'ensemble (52) constitué de la plaque d'obturation (44) et de la bague de maintien (48) est constitué en un matériau présentant les propriétés élastiques du caoutchouc.

5. Clapet de non-retour selon la revendication 4, caractérisé en ce qu'un élément raidisseur (58) en un matériau plus dur que la plaque d'obturation (44) est noyé dans la plaque d'obturation (44).

6. Clapet de non-retour selon l'une des revendications 1 à 5, caractérisé en ce que la plaque d'obturation (44) est pourvue de nervures de raidissement (59) sur sa face supérieure tournée à l'opposé d'un siège (43) du clapet.

7. Clapet de non-retour selon l'une des revendications 1 à 6, caractérisé en ce que la zone de pliage (53) est formée par un pont de matière (56) d'épaisseur réduite.

8. Clapet de non-retour selon l'une des revendications 1 à 7, caractérisé en ce qu'il fait partie intégrante d'un dispositif d'aspiration (1) qui sert à produire une dépression.
